Europäisches Patentamt

**European Patent Office**

Office européen des brevets

(11) Publication number:

**0 248 753**
**A2**

# EUROPEAN PATENT APPLICATION

(21) Application number: 87500022.6

(22) Date of filing: 04.05.87

(51) Int. Cl.⁴: **A 23 B 7/04**

(30) Priority: 06.05.86 ES 554664

(43) Date of publication of application:
09.12.87 Bulletin 87/50

(84) Designated Contracting States:
BE CH DE FR GB IT LI LU NL

(71) Applicant: TRANSFORMACIONS AGRICOLES D'ANOIA,
S.A.
Pl. de la Creu, 25
E-08700 Igualada (Barcelona) (ES)

(72) Inventor: Dalmau Gil, Salvador
Pasaje de la Tossa, 2
E-08700 Igualada Barcelona (ES)

(74) Representative: Ponti Grau, Ignasi
Paseo de Gracia, 33
E-08007 Barcelona (ES)

(54) Method for freezing citrus fruit portions.

(57) The previously washed, disinfected and sorted citrus fruits, according no a conventional procedure, are subjected to a first longitudinal cut in two halves through an axial plane of the fruit and, thereafter, to a second, multiple transverse cut which defines a plurality of portion 5 to 7 mm thick. The portions are spread apart onto a flat support and subjected to fast freezing at between -18 and -25° C, preferably -20° C, for a time of 4 to 8 minutes, preferably 5 to 6 minutes. The frozen portions are ready for weighing and packing.

**Description**

## METHOD FOR FREEZING CITRUS FRUIT PORTIONS

The present invention relates to a method for obtaining frozen citrus fruit portions mainly intended for a further use in soft or cool drinks and whatever other applications within the field of food trade.

The main object of this patent has been to develop a technology adapted for freezing citrus fruits, in which the technical problems of the hitherto known food freezing procedures are at least substantially reduced.

In view of the fact that the citrus fruit products possess a high water contents and that the structure thereof is arranged in cells, the hitherto known freezing procedures give raise in these fruits to an almost total destruction of their tissues, whereby a further taking advantage of the fruit becomes impossible.

A first aim has been to find freezing speed enough for the water contained in every cell of the fruit product to become individually frozen within the cell instead of forming a single crystal, thus avoiding destruction of the cell, which becomes apparent in the defrosting procedure, previous to the final use of the fruit product or of other food articles in which the obtained frozen fruit product is embodied.

It has been further necessary to determine the geometric shape (mainly the thickness) of the fruit product pieces finally left ready for the freezing procedure, which is able of being frozen rapidly enough with the hitherto known freezing methods, in order to obtain the results in terms of freezing speed to be described later on.

The method for obtaining frozen citrus fruit portions which makes the object of the invention consists in performing the following steps of: washing, disinfec tion and sorting of the fruit product; laying out the fruit product onto a conveyor in order to correctly locating the product for the following step; longitudinally cutting the fruit product in two halves through an axial plane; laying out of the product halves onto a second conveyer for correctly locating them for the following step; transversely cutting everyone of the halves into a plurality of portions having a thickness of, preferably, between 5 and 7 mm; rapid freezing of the mutually spaced apart portions to a temperature of between -18° C and -25° C for a time of between 4 and 8 minutes, and weighing and packing the frozen portions.

Preferably, the citrus fruit portions freezing temperature is of -20° C, and the time during which the citrus fruit portions are subjected to freezing is of 5 to 6 minutes.

For a better understanding of the above explanation, a particular embodiment is described in detail hereafter by way of a non restrictive example of the method of the invention.

The used raw material is oranges, lemons and every kind of citrus fruits.

The fruit product is unloaded onto a conventional cleaning machine, wherein the product cleaning and disinfection is performed. Further, the fruit product is passed by means of a roller track or the like onto a sorting table from which the product units which are not adapted for consumption are removed apart. Afterwards, the fruit product is subjected to a final drying.

The fruit product is placed in unitary arrangement onto a conveyer which, while running, suitably locates the fruit product for entering the longitudinal cutting machine. This machine operates by means of two blades with a scissors effect. One of these blades is toothed for exerting a drawing effect onto the nipped fruit product and this latter is longitudinally cut in two halves.

The resulting halves are collected by a V-shaped conveyer belt which, one again, locates the fruit product in a manner which is suitable for being accepted by the multiple transverse cutting machine, of the well known OV Slicer type.

This machine performs, by means of a disc provided with a given number of blades, transversal cuts with variable dimensions according to the used cutting head. In the procedure according to the invention, the best measurement is 6,4 mm, since with this measurement a product with a firm body is obtained. Further, the tiny loss of juice which takes place in the cut does not affect the half slice thus obtained.

The half slices are collected at the outlet side of the cutting machine by means of a flat belt conveyer, at the terminal end of which there is placed a stainless steel baffle for the homogeneous distribution of the half slices onto the input conveyer of a rapid freezing system of the "Rota Freeze" type.

The freezing system is a basic part of the procedure of the invention. Use is made of the rapid freezing, either in a tunnel with cold air convention, or by the contact system. This latter is the preferred one since it is, in first instance, of a faster freezing speed.

The fast freezing device of the "Rota Freeze" type used, is based on a cooled drum upon which the half slices of fresh oranges and lemons are placed in unitary arrangement and spaced apart, by means of a flat belt conveyer. The surface of the drum is at a temperature of approximately -39° C. The fruit product adheres to the drum surface owing to its temperature and the moisture contents of its surface. This adherence is increased by means of an iddler roller which fastens the product onto the drum surface.

The necessary freezing time may range, according to the product to be frozen, between 4 and 8 minutes.

The necessary cold input is the basic and determining factor for the hourly production. For a minimum production of 250 kg/h, at least some 23000 frigories/hour are needed.

The drum revolves at a speed of one turn every 8 minutes and is provided, under the loading belt conveyer, with a stainless steel stripper blade that loosens the fruit product from the drum. A flat belt conveyer collects the fruit product and loads it to a bucket elevator that carries the said product to the chute of the weighing device of a vertical packing machine.

The packing machine uses polyethylene film and fills bags of several sizes (from 0,5 kg to 2 kg) according to the required use.

The ready bags are housed in container means and entered to the cold-storage room for frozen products, set to a temperature of about -24° C, the product being thus ready for dispatching and selling.

The thus obtained fruit product has optimal features as regards flavour, body and aroma, for its admixing with fresh product with which it is usually combined.

## Claims

1. Method for obtaining frozen citrus fruit portions, characterized in that it comprises the steps of: subjecting the citrus fruits, in a first, conventional step of washing, disinfection and sorting; subjecting the thus prepared fruit product to a first longitudinal cut of the fruit in two halves through an axial plane thereof; subjecting the thus obtained halves to a multiple transverse cut to define a plurality of portions having a thickness preferably comprised between 5 and 7 mm; locating the cut portions in an unitary, mutually spaced apart arrangement, and subjecting the thus located portions to fast freezing to a temperature of between -18° C and -25° C, for a time comprised between 4 and 8 minutes, finally proceeding to weighing and packing of the frozen portions.

2. Method as in claim 1, characterized in that the freezing temperature of the citrus fruit portions is, preferably, -20° C.

3. Method as in claims 1 and 2, characterized in that the time during which the citrus fruit portions are subjected to freezing is, preferably, 5 to 6 minutes.